# EUROPEAN PATENT APPLICATION

(11) **EP 4 180 271 A1**
(43) Date of publication of application: **17.05.2023**
(21) Application number: 21838688.6
(22) Date of filing: 06.07.2021
(51) Int. Cl.: B60Q 1/08, B60Q 1/14, G06T 7/00, F21V 7/00, F21V 14/04

(54) **LIGHT DISTRIBUTION CONTROL DEVICE, VEHICULAR LAMP SYSTEM, AND LIGHT DISTRIBUTION CONTROL METHOD**

(30) Priority: 08.07.2020 JP 2020118028; 08.07.2020 JP 2020118029
(71) Applicant: KOITO MANUFACTURING CO., LTD., Minato-ku Tokyo 108-8711 (JP)
(72) Inventor: SHIBATA, Yoshinori, Shizuoka-shi Shizuoka 424-8764 (JP)
(74) Representative: Algemeen Octrooi- en Merkenbureau B.V.
(86) International application number: PCT/JP2021/025499
(87) International publication number: WO 2022/009896

(57) **Abstract**

A vehicular lamp system (1) comprises: an arithmetic unit (10) for extracting an index value from a predetermined processing target region in an image IMG; a pattern determination unit (12) for determining a light distribution pattern PTN such that the index value approximates a maximum value; and a lamp control unit (14) for controlling a variable light distribution lamp (2) so as to form the light distribution pattern PTN. The index value is at least one of an average intensity of HOG feature amounts in a plurality of pixels in the processing target region and an edge gradation proportion, which is a proportion of pixels belonging to a gradation of an edge part with respect to the whole of the plurality of pixels in a local binary pattern (LBP) histogram of the plurality of pixels.

## Description

### [TECHNICAL FIELD]

The present invention relates to light distribution controllers, vehicular lamp systems, and light distribution control methods.

### [BACKGROUND ART]

Research and development are ongoing in recent years on advanced driver-assistance systems (ADAS) or automatic driving technologies as emerging technologies that assist drivers in their driving operations (see, for example, patent document 1) . In ADAS or automatic driving technologies, the situation surrounding the host vehicle is grasped by use of an imager, such as a camera, serving as machine vision, and vehicle control suitable for that situation is executed.

[patent document 1] JP2016-95831

### [PROBLEM TO BE SOLVED BY THE INVENTION]

Implementing the ADAS or automatic driving described above with high accuracy requires recognizing a target present ahead of the host vehicle with high accuracy based on an image generated by an imager.

The present invention has been made in view of such circumstances, and one object of the present invention is to provide a technique for increasing the accuracy of recognizing a target present ahead of a host vehicle.

### [MEANS TO SOLVE THE PROBLEM]

One aspect of the present invention provides a light distribution controller that controls a light distribution variable lamp capable of illuminating a region ahead of a vehicle with a visible light beam of a variable intensity distribution, based on an image obtained from an imager that captures an image of the region ahead of the vehicle. This device includes a computation unit that extracts an index value from a predetermined region to be processed within the image, a pattern determiner that determines a light distribution pattern such that the index value approaches a maximum value, and a lamp controller that controls the light distribution variable lamp so as to form the light distribution pattern. The index value is at least one of a mean intensity of histograms of oriented gradients (HOG) feature values of a plurality of pixels of the region to be processed or an edge gray level proportion indicating, in a local binary pattern (LBP) histogram of the plurality of pixels, a proportion of the number of pixels belonging to a gray level of an edge portion to a total number of the plurality of pixels.

Another aspect of the present invention provides a vehicular lamp system. This system includes a light distribution variable lamp capable of illuminating a region ahead of a vehicle with a visible light beam of a variable intensity distribution, an imager that captures an image of the region ahead of the vehicle, and the light distribution controller of the aspect above.

Another aspect of the present invention provides a light distribution control method of controlling a light distribution variable lamp capable of illuminating a region ahead of a vehicle with a visible light beam of a variable intensity distribution, based on an image obtained repeatedly from an imager that captures an image of the region ahead of the vehicle. This control method includes extracting an index value from a predetermined region to be processed within the image, determining a light distribution pattern such that the index value approaches a maximum value, and controlling the light distribution variable lamp so as to form the light distribution pattern. The index value is at least one of a mean intensity of histograms of oriented gradients (HOG) feature values of a plurality of pixels of the region to be processed or an edge gray level proportion indicating, in a local binary pattern (LBP) histogram of the plurality of pixels, a proportion of the number of pixels belonging to a gray level of an edge portion to a total number of the plurality of pixels.

Another aspect of the present invention provides a light distribution controller that controls a light distribution variable lamp capable of illuminating a region ahead of a vehicle with a visible light beam of a variable intensity distribution, based on an image obtained from an imager that captures an image of the region ahead of the vehicle. This device includes a computation unit that extracts a local binary pattern (LBP) histogram of a predetermined region to be processed within the image and calculates a degree of similarity between the extracted LBP histogram and a template LBP histogram prepared beforehand, a pattern determiner that determines a light distribution pattern such that the degree of similarity approaches a maximum value, and a lamp controller that controls the light distribution variable lamp so as to form the light distribution pattern.

Another aspect of the present invention provides a vehicular lamp system. This system includes a light distribution variable lamp capable of illuminating a region ahead of a vehicle with a visible light beam of a variable intensity distribution, an imager that captures an image of the region ahead of the vehicle, and the light distribution controller of the aspect above.

Another aspect of the present invention provides a light distribution control method of controlling a light distribution variable lamp capable of illuminating a region ahead of a vehicle with a visible light beam of a variable intensity distribution, based on an image obtained repeatedly from an imager that captures an image of the region ahead of the vehicle. This control method includes extracting a local binary pattern (LBP) histogram of a predetermined region to be processed within the image and calculating a degree of similarity between the extracted LBP histogram and a template LBP histogram prepared beforehand, determining a light distribution pattern such that the degree of similarity approaches a maximum value, and controlling the light distribution variable lamp so as to form the light distribution pattern.

Any optional combination of the above constituent elements or an embodiment obtained by converting what is expressed by the present invention from or to a method, a device, a system, and so on is also effective as an embodiment of the present invention.

### [ADVANTAGE OF THE PRESENT INVENTION]

The present invention can increase the accuracy of recognizing a target ahead of a host vehicle.

### [BRIEF DESCRIPTION OF THE DRAWINGS]

Fig. 1 is a block diagram of a vehicular lamp system according to Embodiment 1.
Fig. 2 is a schematic diagram of an image generated while a reference light distribution pattern is formed.
Fig. 3A illustrates a relationship between the illuminance of a light distribution pattern and the mean intensity of HOG feature values. Fig. 3B illustrates a relationship between the illuminance of a light distribution pattern and the edge gray level proportion in an LBP histogram. Fig. 3C illustrates a relationship between the illuminance of a light distribution pattern and the recognition score of a target.
Fig. 4 is a flowchart illustrating one example of light distribution control executed by a light distribution controller.
Fig. 5 is a block diagram of a vehicular lamp system according to Embodiment 2.
Fig. 6 is a schematic diagram of an image generated while a reference light distribution pattern is formed.
Fig. 7A schematically illustrates one example of an LBP histogram extracted from a region to be processed. Fig. 7B schematically illustrates one example of a template LBP histogram.
Fig. 8 is a flowchart illustrating one example of light distribution control.

### [MODE FOR CARRYING OUT THE INVENTION]

Hereinafter, the present invention will be described based on some exemplary embodiments and with reference to the drawings. The embodiments are illustrative in nature and are not intended to limit the invention. Not all the features and combinations thereof described according to the embodiments are necessarily essential to the invention. Identical or equivalent constituent elements, members, and processes illustrated in the drawings are given identical reference characters, and duplicate description thereof will be omitted, as appropriate. The scales and the shapes of the components illustrated in the drawings are set merely for convenience in order to facilitate an understanding of the description and are not to be interpreted as limiting the invention, unless specifically indicated otherwise. When terms such as "first" and "second" are used in the present specification or in the claims, these terms do not indicate the order or the level of importance in any way and are merely used to discriminate a given configuration from another configuration, unless specifically indicated otherwise. Any part of a member that is not important in describing the embodiments is omitted from the drawings.

### (Embodiment 1)

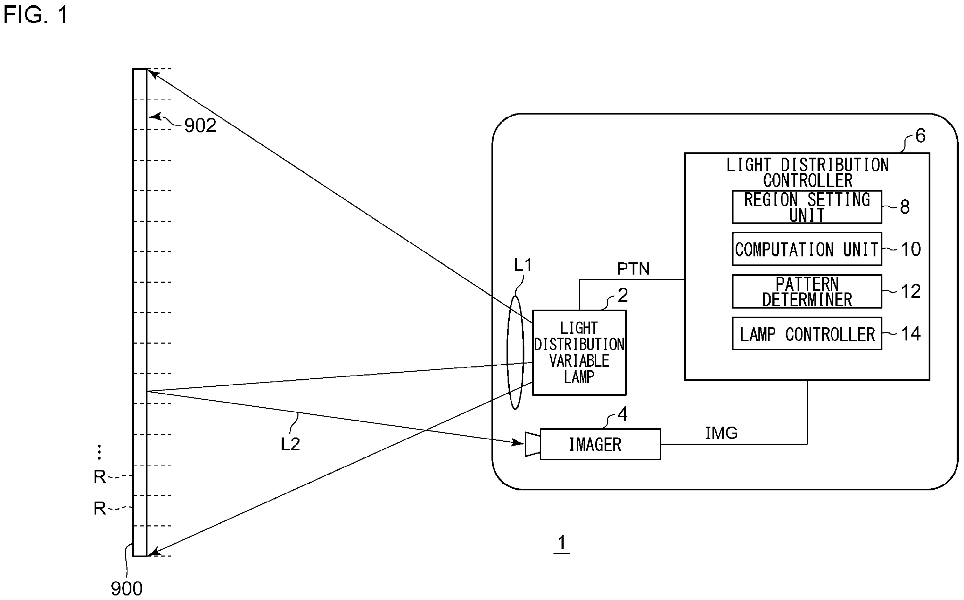

Fig. 1 is a block diagram of a vehicular lamp system according to Embodiment 1. Fig. 1 depicts some of the constituent elements of a vehicular lamp system 1 in the form of functional blocks. These functional blocks are implemented, in terms of their hardware configuration, by elements and/or circuits, such as a CPU or a memory of a computer, or implemented, in terms of their software configuration, by a computer program or the like. It is to be appreciated by a person skilled in the art that these functional blocks can be implemented in a variety of forms through combinations of hardware and software.

The vehicular lamp system 1 includes a light distribution variable lamp 2, an imager 4, and a light distribution controller 6. These members may be embedded within a single housing, or one or more of the members may be provided outside the housing. For example, the imager 4 may be an onboard camera provided in the vehicle compartment or may be a camera with a built-in lamp housed inside a lamp room along with the light distribution variable lamp 2. The light distribution controller 6 may be embedded in a vehicle ECU or embedded in a lamp ECU. As will be described later, the light distribution controller 6 includes a region setting unit 8, a computation unit 10, a pattern determiner 12, and a lamp controller 14. One or more of these components may be embedded in the vehicle ECU, and the remaining one or more components may be embedded in the lamp ECU.

The light distribution variable lamp 2 is a lamp capable of illuminating a region ahead of a vehicle with a visible light beam L1 of a variable intensity distribution. The light distribution variable lamp 2 is enabled to vary the illuminance of light that shines on each of a plurality of individual regions R arrayed ahead of the vehicle independently of each other. The plurality of individual regions R are arrayed, for example, in a matrix. The light distribution variable lamp 2 receives information instructing a light distribution pattern PTN from the light distribution controller 6 and emits a visible light beam L1 having an intensity distribution corresponding to the light distribution pattern PTN. With this operation, the light distribution pattern PTN is formed ahead of the host vehicle. A light distribution pattern PTN can be regarded as a two-dimensional illuminance distribution of an illumination pattern 902 that the light distribution variable lamp 2 forms on an imaginary vertical screen 900 located ahead of the host vehicle.

There is no particular limitation on the configuration of the light distribution variable lamp 2, and the light distribution variable lamp 2 includes, for example, a plurality of light sources arrayed in a matrix and a lighting circuit that drives the light sources to turn them on independently of each other. Some preferred examples of such a light source include a semiconductor light source, such as a light emitting diode (LED), a laser diode (LD), or an organic or inorganic electroluminescence (EL) light source. The individual regions R are mapped to the respective light sources, and each individual region R is illuminated individually with light from the corresponding light source. In order to form an illuminance distribution corresponding to a given light distribution pattern PTN, the light distribution variable lamp 2 may include, for example, a pattern forming device of a matrix type, such as a digital mirror device (DMD) or a liquid-crystal device, or a pattern forming device of a scan optics type that scans a space ahead of the host vehicle with light from the light sources.

The length of time required for the light distribution variable lamp 2 to form a single light distribution pattern PTN is, for example, from 0.1 ms to 5 ms. Meanwhile, the resolution of the light distribution variable lamp 2, or in other words the light distribution resolving power, is, for example, from 1,000 pixels to 2,000,000 pixels. The resolution (light distribution resolving power) of the light distribution variable lamp 2 refers to the number of unit areas whose illuminance can be changed independently of each other in a light distribution pattern PTN. In one example, unit areas correspond to the respective individual regions R.

The imager 4 has sensitivity to a visible light range and repeatedly captures an image of the region ahead of the vehicle. The imager 4 captures an image of reflected light L2 of a visible light beam L1 reflected by an object located ahead of the vehicle. It suffices that the imager 4 have sensitivity to the wavelength range of at least a visible light beam L1. An image IMG that the imager 4 generates is sent to the light distribution controller 6. The image IMG is also sent to the vehicle ECU. The vehicle ECU can use the acquired image IMG for target recognition in ADAS or automatic driving. The imager 4 has a frame rate of, for example, from 200 fps to 10,000 fps (from 0.1 ms to 5 ms per frame). Meanwhile, the imager 4 has a resolution of, for example, from 300,000 pixels to 5,000,000 pixels.

The light distribution controller 6 controls illumination of light from the light distribution variable lamp 2 based on an image IMG obtained from the imager 4, and controls a light distribution pattern PTN dynamically and adaptively. The light distribution controller 6 can be formed by a digital processor. The light distribution controller 6 may be formed, for example, by a combination of a microcomputer including a CPU and a software program or by a field programmable gate array (FPGA), an application specific IC (ASIC), or the like.

The light distribution controller 6 includes the region setting unit 8, the computation unit 10, the pattern determiner 12, and the lamp controller 14. These components each operate as an integrated circuit constituting the component executes a program stored in a memory. An operation of each component will be described below in detail.

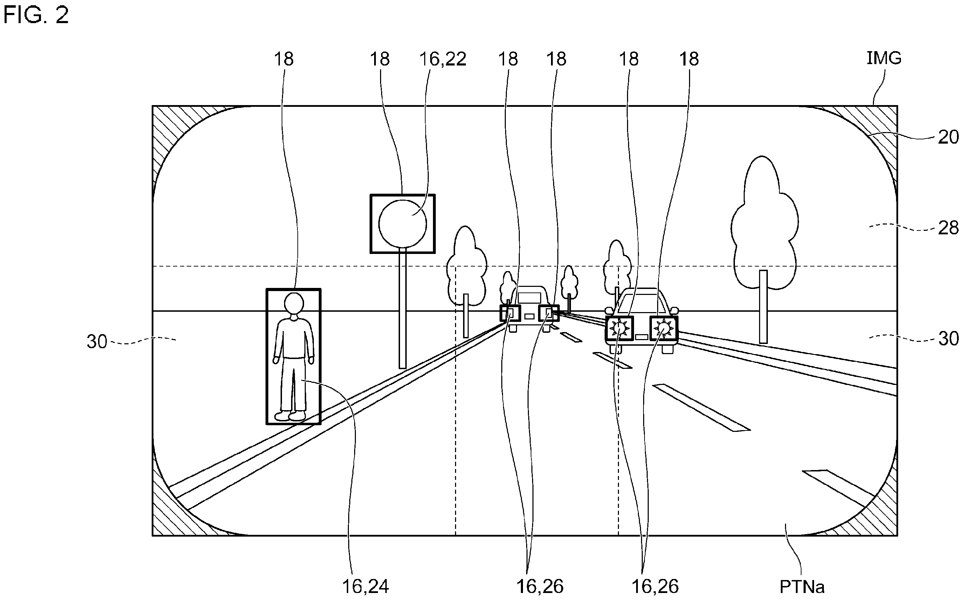

Fig. 2 is a schematic diagram of an image IMG generated while a reference light distribution pattern PTNa is formed. The region setting unit 8 sets a predetermined region to be processed 18 based on a pixel region 16 having a pixel value no lower than a predetermined value within an image IMG generated while a predetermined reference light distribution pattern PTNa is formed in a region ahead of the vehicle. The pixel value is, for example, a luminance value.

The reference light distribution pattern PTNa is composed of light having an illuminance of no lower than 50% of the maximum illuminance of the light distribution variable lamp 2. In other words, the reference light distribution pattern PTNa is a light distribution pattern PTN whose entirety has an illuminance of no lower than 50% of the maximum illuminance. Preferably, the reference light distribution pattern PTNa is a light distribution pattern PTN whose entirety is at the maximum illuminance. The maximum illuminance of the light distribution variable lamp 2 is, for example, defined by laws and regulations. Information on the reference light distribution pattern PTNa is held beforehand in the pattern determiner 12. For example, the region setting unit 8 can cause the light distribution variable lamp 2 to form the reference light distribution pattern PTNa via the pattern determiner 12 and the lamp controller 14.

The region setting unit 8 can set, within an image IMG, a region to be processed 18 in an illumination-capable range 20 that the light distribution variable lamp 2 can illuminate with a visible light beam L1. In one example, in the case illustrated in Fig. 2, substantially the entirety of the image IMG is the illumination-capable range 20.

The region setting unit 8, for example, holds beforehand a threshold concerning luminance values. The region setting unit 8 then sets, as a pixel region 16, a set of pixels having a luminance value no lower than the threshold in an image IMG generated while a reference light distribution pattern PTNa is formed. Values such as a predetermined value or a threshold concerning pixel values (luminance values) can be set, as appropriate, by a person designing the device based on experiments or simulations. The region setting unit 8 may set a set of pixels having a maximum luminance value as a pixel region 16. This case allows setting of any threshold to be omitted.

A high-luminance pixel region 16 is generated by a light reflective object 22 or a pedestrian 24 present ahead of the host vehicle. The light reflective object 22 and the pedestrian 24 are targets whose presence should be noticed in ADAS or automatic driving. The light reflective object 22 is, for example, at least one selected from the group consisting of a road sign, a roadside guide (delineator), and a signboard. Alternatively, the light reflective object 22 is an object having a retroreflective surface in a part thereof that is to be illuminated with light from the light distribution variable lamp 2. A high-luminance pixel region 16 is generated also by a lamp 26 of a front vehicle, such as a headlamp or a tail lamp. Therefore, a region to be processed 18 overlaps a light reflective object 22, a pedestrian 24, or a lamp 26 of a front vehicle.

The region setting unit 8 sets a region to be processed 18 based on an identified high-luminance pixel region 16. The minimum unit of the size of a region to be processed 18 corresponds to the light distribution resolving power of the light distribution variable lamp 2. For example, a region to be processed 18 is mapped one-to-one to a unit region of a light distribution pattern PTN. In other words, the minimum unit of a region to be processed 18 corresponds to a single individual region R.

In a case where the pixels in an image IMG and the unit regions in a light distribution pattern PTN are in a one-to-one correspondence, the region setting unit 8 can set, as a region to be processed 18, a set of unit regions overlapping one pixel region 16. Meanwhile, in a case where a plurality of unit regions correspond to one pixel as well, the region setting unit 8 can set, as a region to be processed 18, a set of unit regions overlapping one pixel region 16. Therefore, in these cases, the region setting unit 8 can set a region to be processed 18 shaped substantially identical to a light reflective object, a pedestrian, or a lamp in an image IMG. Herein, a predetermined margin may be provided around a pixel region 16, and a region to be processed 18 that is larger than the pixel region 16 may be set.

Meanwhile, in a case where one unit region corresponds to a plurality of pixels, the region setting unit 8 can set a region to be processed 18 in the following manner. Specifically, in a case where one pixel region 16 extends across a plurality of unit regions, the region setting unit 8 can set, as a region to be processed 18, all the unit regions overlapping the pixel region 16. Alternatively, the region setting unit 8 may set a unit region having the largest area overlapping the pixel region 16 as a region to be processed 18 corresponding to this pixel region 16.

Regardless of the correspondence relationship between the pixels and the unit regions, if an image IMG includes a plurality of pixel regions 16, it is preferable to set a region to be processed 18 for each of these pixel regions 16. In other words, it is preferable that there be no upper limit on the number of regions to be processed 18 that can be set in an image IMG. However, there may be an upper limit on the number of regions to be processed 18. In a case where the upper limit is set on the number of regions to be processed 18, it is preferable that the regions to be processed 18 be assigned sequentially to pixel regions 16 having a greater area. The region setting unit 8 sends information indicating a region or regions to be processed 18 to the computation unit 10.

The computation unit 10 subjects a region to be processed 18 in an image IMG to a known image processing technique and thus extracts a predetermined index value from the region to be processed 18. The index value is at least one of the mean intensity of histograms of oriented gradients (HOG) feature values of a plurality of pixels of the region to be processed 18 or the edge gray level proportion in a local binary pattern (LBP) histogram of the plurality of pixels.

The mean intensity of HOG feature values is a value obtained by averaging the magnitude of vectors of the HOG feature values in the pixels of a region to be processed 18, and one mean intensity is defined for one region to be processed 18. The edge gray level proportion is the proportion of the number of pixels belonging to the gray level of an edge portion to the total number of the pixels in an LBP histogram. The gray level of an edge portion can be set, as appropriate, by a person designing the device based on experiments or simulations, and is stored beforehand in a memory.

In a case where a region to be processed 18 is included in a first region 28 within an image IMG, the computation unit 10 according to the present embodiment extracts the edge gray level proportion from this region to be processed 18. Meanwhile, in a case where a region to be processed 18 is included in a second region 30 within an image IMG, the computation unit 10 extracts the mean intensity of HOG feature values from this region to be processed 18.

The computation unit 10 holds beforehand information concerning a first region 28 and a second region 30 in its memory. A first region 28 is a region where a predetermined light reflective object 22 is predicted to appear in an image IMG. A second region 30 is a region where a pedestrian 24 is predicted to appear in an image IMG. A first region 28, for example, extends in the widthwise direction of the vehicle in the upper half of an image IMG. Meanwhile, a second region 30 is located below a first region 28 and at each end in the widthwise direction of the vehicle. The position or the shape of a first region 28 or a second region 30 can be set, as appropriate, by a person designing the device based on experiments or simulations.

The position or the shape of a first region 28 or a second region 30 may be fixed regardless of a change in the attitude of the host vehicle or a change in the traveling environment or may be varied in accordance with a change in the attitude of the host vehicle or a change in the traveling environment. Examples of changes in the attitude of the host vehicle include a change in its attitude in the pitch direction or in the yaw direction. Examples of changes in the traveling environment of the host vehicle include a change observed when the traveling route of the host vehicle changes from a straight route to a curved route or a change observed when the traveling route of the host vehicle changes from a horizontal route to an inclined route. A first region 28 or a second region 30 is displaced or deformed, for example, by the computation unit 10.

The computation unit 10 can detect a change in the attitude or a change in the traveling environment by receiving a signal from various sensors in the host vehicle, such as a vehicle-height sensor, a yaw sensor, an acceleration sensor, or a steering sensor. The computation unit 10, for example, holds beforehand a conversion table mapping the position or the shape of a region that is to be displaced or deformed and various sensor values. The computation unit 10 can displace or deform a target region based on this conversion table.

LBP feature values are more suitable than HOG feature values for use in recognizing a light reflective object 22. Therefore, the edge gray level proportion in an LBP histogram is extracted from a region to be processed 18 included in a first region 28 where a light reflective object 22 is expected to appear, and thus a light distribution pattern PTN that is more suitable for recognizing a light reflective object 22 can be formed. Meanwhile, HOG feature values are more suitable than LBP feature values for use in recognizing a pedestrian 24. Therefore, the mean intensity of HOG feature values is extracted from a region to be processed 18 included in a second region 30 where a pedestrian 24 is expected to appear, and thus a light distribution pattern PTN that is more suitable for recognizing a pedestrian 24 can be formed.

In a case where a region to be processed 18 is included in a region other than a first region 28 and a second region 30 in an image IMG, the mean intensity of HOG feature values may be extracted from this region to be processed 18, or the edge gray level proportion may be extracted from this region to be processed 18. For example, the mean intensity of HOG feature values may be extracted from a region to be processed 18 included in the aforementioned region, and thus a light distribution pattern PTN with a priority on the safety of a pedestrian 24 can be formed.

Regardless of which region in an image IMG includes regions to be processed 18, the computation unit 10 may extract only the mean intensity of HOG feature values from all the regions to be processed 18 within the image IMG or extract only the edge gray level proportion in an LBP histogram from all the regions to be processed 18 within the image IMG. Alternatively, the computation unit 10 may extract both the mean intensity of HOG feature values and the edge gray level proportion in an LBP histogram from the same region to be processed 18. The computation unit 10 sends information indicating the index value to the pattern determiner 12.

The pattern determiner 12 determines a light distribution pattern PTN such that the index value acquired from the computation unit 10 approaches its maximum value. The mean intensity of HOG feature values and the edge gray level proportion, or the index values, can be adjusted by changing the illuminance (intensity) of light that shines on the region to be processed 18. Therefore, the pattern determiner 12 can bring an index value of a region to be processed 18 in an image IMG obtained while a light distribution pattern PTN is formed closer to its maximum value by changing the illuminance of a portion overlapping the region to be processed 18 in the light distribution pattern PTN (this portion is referred to below as an overlapping portion, as appropriate).

In a case where the computation unit 10 extracts both the mean intensity of HOG feature values and the edge gray level proportion in an LBP histogram from each region to be processed 18, the pattern determiner 12, for example, sets the mean illuminance determined based on each index value as the illuminance of the overlapping region. The illuminance of a portion excluding the overlapping portion in the light distribution pattern PTN is set based on other light distribution control. The pattern determiner 12 sends information indicating a determined light distribution pattern PTN to the lamp controller 14.

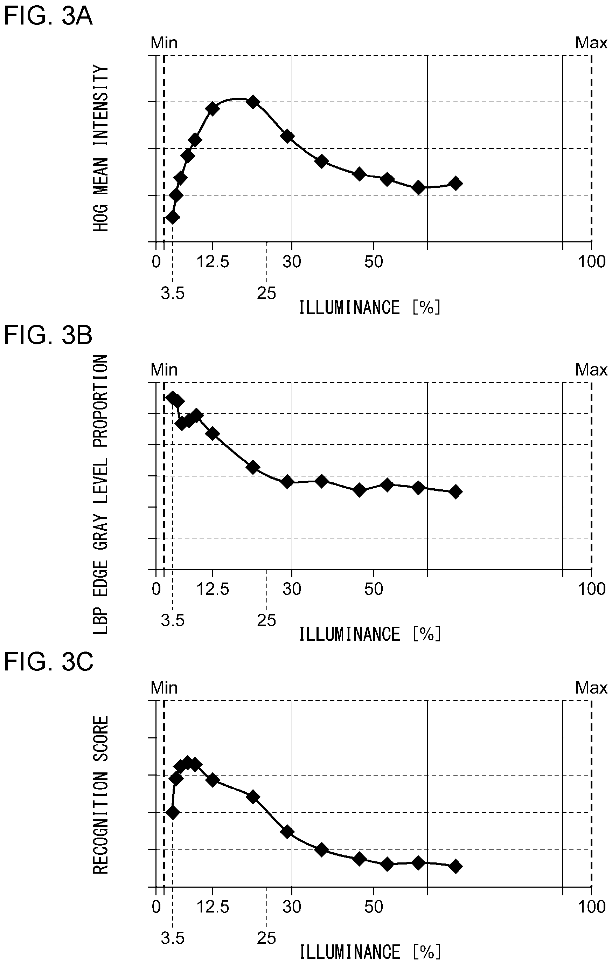

Fig. 3A illustrates a relationship between the illuminance of a light distribution pattern PTN and the mean intensity of HOG feature values. Fig. 3B illustrates a relationship between the illuminance of a light distribution pattern PTN and the edge gray level proportion in an LBP histogram. Fig. 3C illustrates a relationship between the illuminance of a light distribution pattern PTN and the recognition score of a target. In Figs. 3A to 3C, the illuminance of the light distribution pattern PTN (horizontal axis) represents the illuminance in percentages with the maximum illuminance being 100%.

As illustrated in Fig. 3A, when the illuminance is reduced from the maximum illuminance, the mean intensity of HOG feature values rarely changes at least until the illuminance reaches 50% of the maximum illuminance and starts to rise gradually upon the illuminance falling below 50% of the maximum illuminance. Then, the mean intensity reaches its maximum when the illuminance is between about 3.5% and about 30% of the maximum illuminance. In one example, the mean intensity reaches its maximum when the illuminance is between about 12.5% and about 25% of the maximum illuminance.

As illustrated in Fig. 3B, when the illuminance is reduced from the maximum illuminance, the edge gray level proportion in the LBP histogram rarely changes at least until the illuminance reaches 50% of the maximum illuminance and starts to rise gradually upon the illuminance falling below 50% of the maximum illuminance. Then, the edge gray level proportion reaches its maximum when the illuminance is between about 3.5% and about 30% of the maximum illuminance. In one example, the edge gray level proportion reaches its maximum when the illuminance is between about 3.5% and about 12.5% of the maximum illuminance.

As illustrated in Fig. 3C, when the illuminance is reduced from the maximum illuminance, the recognition score rarely changes at least until the illuminance reaches 50% of the maximum illuminance and starts to rise gradually upon the illuminance falling below 50% of the maximum illuminance. Then, the recognition score reaches its maximum when the illuminance is between about 3.5% and about 30% of the maximum illuminance. In one example, the recognition score reaches its maximum when the illuminance is between about 3.5% and about 12.5% of the maximum illuminance. Herein, this recognition score is obtained with use of an artificial intelligence (AI) engine so constructed as to recognize a target within an image IMG based on a predetermined target recognition algorithm.

Based on the above, the accuracy of recognizing a target with use of the imager 4 can be increased by determining a light distribution pattern PTN such that the mean intensity of HOG feature values or the edge gray level proportion in an LBP histogram approaches its maximum value. In particular, when a reference light distribution pattern PTNa having an illuminance of no lower than 50% is formed and then a region to be processed 18 is set and when the illuminance of an overlapping portion is reduced gradually to bring each index value closer to its maximum value, failure to set a region to be processed 18 (failure to detect a target) can be suppressed, and the accuracy of recognizing a target can be increased more reliably. When the illuminance of an overlapping portion in a light distribution pattern PTN is adjusted to fall within a range of no lower than 3.5% nor higher than 30% of the maximum illuminance, the mean intensity of HOG feature values and the edge gray level proportion can each be adjusted to such a value that can yield a good recognition score.

The lamp controller 14 sends information instructing a determined light distribution pattern PTN to the light distribution variable lamp 2 and controls the light distribution variable lamp 2 so as to form the light distribution pattern PTN. For example, in a case where the light sources are controlled through analog light control, the lamp controller 14 adjusts the direct-current level of the driving current that flows in the light sources. Meanwhile, in a case where the light sources are controlled through pulse width modulation (PWM) light control, the lamp controller 14 adjusts the mean level of the driving current by switching the current that flows in the light sources and adjusting the ratio of on periods. In a case where the light distribution variable lamp 2 includes a DMD, the lamp controller 14 may control the on/off switching of each mirror element constituting the DMD. In a case where the light distribution variable lamp 2 includes a liquid-crystal device, the lamp controller 14 may control the optical transmittance of the liquid-crystal device.

With such control, a light distribution pattern PTN that can improve the accuracy of recognizing a target is formed ahead of the host vehicle. Then, the imager 4 generates an image IMG while this light distribution pattern PTN is formed. For example, the region setting unit 8 assigns, to each newly acquired image IMG, a region to be processed 18 set in an image IMG generated while a reference light distribution pattern PTNa is formed, until a reset process (described later) is executed. In other words, a region to be processed 18 is fixed until the reset process is performed. Thereafter, the index value is extracted again, a light distribution pattern PTN is determined again, and the light distribution pattern PTN is formed again.

In one example, the light distribution controller 6 executes a reset process when a series of operations from the acquisition of an image IMG to the formation of a light distribution pattern PTN has been repeated a predetermined number of times. In the reset process, the lamp controller 14 controls the light distribution variable lamp 2 so as to form a reference light distribution pattern PTNa. The region setting unit 8 sets a region to be processed 18 in an image IMG newly generated while the reference light distribution pattern PTNa is formed. Thus, a region to be processed 18 can follow the movement of its corresponding pixel region 16.

The timing of starting a reset process can be grasped by, for example, counting the number of images IMG that the region setting unit 8 has acquired after a reference light distribution pattern PTNa has been formed or after a region to be processed 18 has been set. Alternatively, the timing of starting a reset process can be grasped by counting the number of times the pattern determiner 12 has determined a light distribution pattern PTN or by counting the number of times the lamp controller 14 has formed a light distribution pattern PTN. The predetermined number of times, the number of images IMG, or the number of times a light distribution pattern PTN is determined or formed used in relation to the execution of a reset process can be set, as appropriate, by a person designing the device based on experiments or simulations. The illuminance of light that shines on a region outside a region to be processed 18 because of the execution of a reset process is increased preferably gradually. Thus, any sense of discomfort caused to the driver can be reduced.

The pattern determiner 12 according to the present embodiment gradually changes the illuminance of a portion overlapping a region to be processed in a light distribution pattern and reduces the amount of change in the illuminance with an increase in the number of times the illuminance of light that shines on the region to be processed 18 is changed. In other words, the pattern determiner 12 reduces the change in the illuminance of light that shines on a region to be processed 18 with an increase in the number of times a light distribution pattern PTN is determined after the region to be processed 18 has been set.

For example, the illuminance of an overlapping portion in a light distribution pattern PTN formed following a reference light distribution pattern PTNa is set to a value obtained by multiplying a maximum illuminance value by a dimming rate α. The illuminance of an overlapping portion in a light distribution pattern PTN determined thereafter is set to a value obtained by multiplying the illuminance of the overlapping portion in the light distribution pattern PTN being formed at that moment by a dimming rate α smaller than the dimming rate α used previously. With this configuration, the index value increases gradually and approaches its maximum value. As the illuminance of an overlapping portion is reduced gradually, the index value may turn to decrease at a certain timing.

When the index value turns to decrease, the pattern determiner 12 increases the illuminance of an overlapping portion in a light distribution pattern PTN formed thereafter. In other words, the illuminance of an overlapping portion in a light distribution pattern PTN determined immediately after the index value has turned to decrease is set to a value obtained by multiplying the illuminance of an overlapping portion in a light distribution pattern PTN being formed at that moment by a brightening rate β. With this configuration, the index value turns to increase again and approaches its maximum value. Preferably, the brightening rate β used immediately after the index value has turned to decrease is smaller than the dimming rate α used immediately before the index value has turned to decrease.

The illuminance of an overlapping portion in a light distribution pattern PTN determined thereafter is set to a value obtained by multiplying the illuminance of an overlapping portion in a light distribution pattern PTN being formed at that moment by a brightening rate β smaller than the brightening rate β used previously. When the index value turns to decrease again, the illuminance of an overlapping portion is reduced. Thereafter, the illuminance of the overlapping portion is reduced and increased in an alternating manner until a reset process is executed.

When the dimming rate α and the brightening rate β are reduced gradually, the index value can be kept from decreasing by a large amount when the index value turns to decrease from an increase. This configuration makes it easier to stabilize the index value and in turn the illuminance of an overlapping portion. The change in the illuminance of an overlapping portion may be linear or nonlinear. In other words, the dimming rate α may be changed each time a light distribution pattern PTN is determined or changed after a light distribution pattern PTN has been determined a predetermined number of times while the same dimming rate α is used. The same applies to the brightening rate β.

In the control described above, the illuminance of a lamp 26 of a front vehicle is adjusted in the same manner as the illuminance of a light reflective object 22 or a pedestrian 24 is adjusted. However, since a lamp 26 is a self-luminous object, even if the illumination of the light that shines on the lamp 26 changes, the change in the way how the lamp 26 appears in an image IMG is small. Therefore, no problem arises even if a pixel region 16 derived from a lamp 26 included in an image IMG is regarded as a light reflective object 22 or a pedestrian 24.

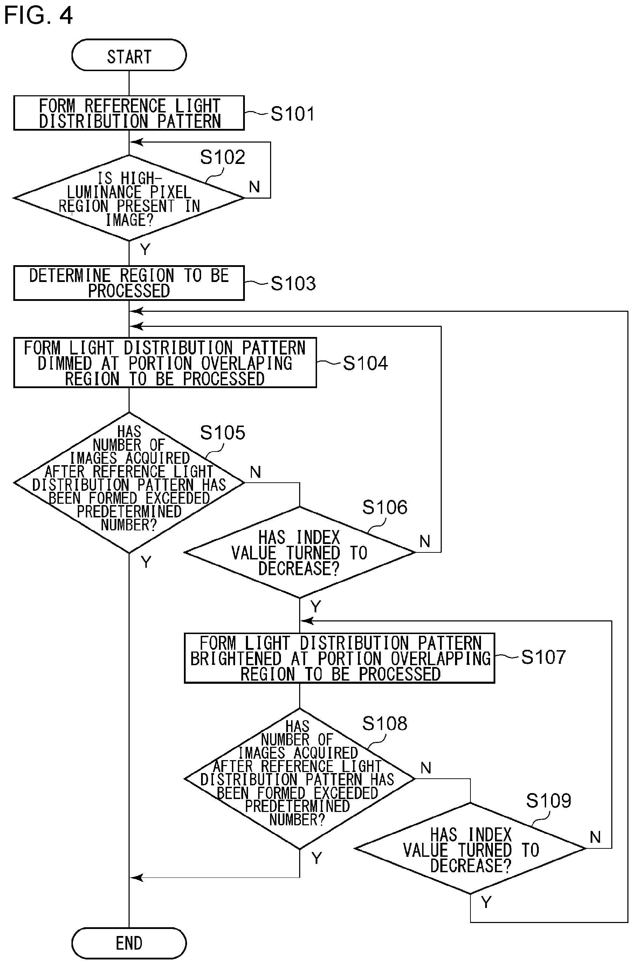

Fig. 4 is a flowchart illustrating one example of light distribution control executed by the light distribution controller 6. This flow is executed repeatedly at predetermined timings, for example, when the execution of the light distribution control is instructed via a light switch (not illustrated) and when the ignition is on. While the light distribution control is being executed, the imager 4 repeatedly captures an image of the region ahead of the vehicle and sends an image IMG to the light distribution controller 6.

First, the light distribution controller 6 controls the light distribution variable lamp 2 so as to form a reference light distribution pattern PTNa (S101). Then, the light distribution controller 6 determines whether a high-luminance pixel region 16 is present in an image IMG generated while the reference light distribution pattern PTNa is formed (S102). If a high-luminance pixel region 16 is present (Y at S102), the light distribution controller 6 determines a region to be processed 18 based on the pixel region 16 (S103). If no high-luminance pixel region 16 is present (N at S102), the light distribution controller 6 repeatedly determines whether a pixel region 16 is present based on an image IMG acquired successively (S102).

Next, the light distribution controller 6 determines a light distribution pattern PTN that is dimmed at a portion overlapping the region to be processed 18 and causes this light distribution pattern PTN to be formed (S104). Thereafter, the light distribution controller 6 determines whether the number of images IMG acquired after the reference light distribution pattern PTNa has been formed has exceeded a predetermined value (S105). If the number of acquired images IMG exceeds the predetermined value (Y at S105), the light distribution controller 6 terminates this routine. Upon the end of this routine, the next routine starts, and a reference light distribution pattern PTNa is formed (S101). The process ranging from the end of one routine to the formation of a reference light distribution pattern PTNa in the next routine corresponds to the execution of a reset process.

If the number of acquired images IMG does not exceed the predetermined value (N at S105), the light distribution controller 6 determines whether an index value has turned to decrease based on an image IMG that the imager 4 has generated while the light distribution pattern PTN has been formed at step S104 (S106). In a case where a plurality of regions to be processed 18 are set, the light distribution controller 6 determines whether an index value of each of the plurality of regions to be processed 18 has turned to decrease. If the index value has not turned to decrease (N at S106), the light distribution controller 6 causes a light distribution pattern PTN that is further dimmed at a portion overlapping the region to be processed 18 to be formed (S104).

If the index value has turned to decrease (Y at S106), the light distribution controller 6 determines a light distribution pattern PTN that is brightened at a portion overlapping the region to be processed 18 and causes this light distribution pattern PTN to be formed (S107). Thereafter, the light distribution controller 6 determines whether the number of images IMG acquired after the reference light distribution pattern PTNa has been formed has exceeded a predetermined value (S108). If the number of acquired images IMG exceeds the predetermined value (Y at S108), the light distribution controller 6 terminates this routine and executes a reset process.

If the number of acquired images IMG does not exceed the predetermined value (N at S108), the light distribution controller 6 determines whether the index value has turned to decrease based on an image IMG that the imager 4 has generated while the light distribution pattern PTN has been formed at step S107 (S109). If the index value has not turned to decrease (N at S109), the light distribution controller 6 causes a light distribution pattern PTN that is further brightened at a portion overlapping the region to be processed 18 to be formed (S107). If the index value has turned to decrease (Y at S109), the light distribution controller 6 determines a light distribution pattern PTN that is dimmed at a portion overlapping the region to be processed 18 and causes this light distribution pattern PTN to be formed (S104).

As described thus far, the light distribution controller 6 according to the present embodiment includes the computation unit 10 that extracts an index value from a predetermined region to be processed 18 within an image IMG that the imager 4 has generated, the pattern determiner 12 that determines a light distribution pattern PTN such that the index value approaches its maximum value, and the lamp controller 14 that controls the light distribution variable lamp 2 so as to form the light distribution pattern PTN. The index value that the computation unit 10 extracts is at least one of the mean intensity of HOG feature values of a plurality of pixels of the region to be processed 18 or the edge gray level proportion indicating, in an LBP histogram of the plurality of pixels, a proportion of the number of pixels belonging to a gray level of an edge portion to the total number of the plurality of pixels. The vehicular lamp system 1 according to the present embodiment includes the light distribution variable lamp 2 capable of illuminating a region ahead of the vehicle with a visible light beam L1 of a variable intensity distribution, the imager 4 that captures an image of the region ahead of the vehicle, and the light distribution controller 6 according to the present embodiment.

In this manner, light distribution in a region to be processed 18 is controlled based on at least one of the mean intensity of HOG feature values extracted from the region to be processed 18 or the edge gray level proportion of an LBP histogram extracted from the region to be processed 18, and this configuration makes it possible to increase the accuracy of recognizing a target with use of an image IMG in ADAS or automatic driving. In a case where a target is a light reflective object 22, the illuminance of light that shines on the light reflective object 22 can be reduced appropriately, and thus lens flare or blooming that could occur around the light reflective object 22 can be suppressed. This makes it possible to increase also the accuracy of recognizing other targets or traffic participants present around the light reflective object 22.

The light distribution controller 6 according to the present embodiment further includes the region setting unit 8. The region setting unit 8 sets the region to be processed 18 based on a pixel region 16 having a pixel value no lower than a predetermined value in an image IMG generated while a reference light distribution pattern PTNa is formed in the region ahead of the vehicle. The reference light distribution pattern PTNa is composed of light having an illuminance of no lower than 50% of the maximum illuminance of the light distribution variable lamp 2. In this manner, a high-illuminance reference light distribution pattern PTNa is formed, and a region to be processed 18 is set. Then, the illuminance of a portion overlapping the region to be processed 18 is reduced gradually. Thus, the accuracy of recognizing a target can be increased more reliably while reducing the likelihood of failing to detect the target whose presence should be grasped in ADAS or automatic driving.

The computation unit 10 according to the present embodiment extracts the edge gray level proportion from a region to be processed 18 if the region to be processed 18 is included in a first region 28 where a predetermined light reflective object 22 is predicted to appear in an image IMG or extracts the mean intensity of HOG feature values from a region to be processed 18 if the region to be processed 18 is included in a second region 30 where a pedestrian 24 is predicted to appear in an image IMG. This makes it possible to further increase the accuracy of recognizing a target.

The pattern determiner 12 according to the present embodiment gradually changes the illuminance of a portion overlapping a region to be processed 18 in a light distribution pattern PTN and reduces the amount of change with an increase in the number of times the change is made. This makes it easier to stabilize the illuminance of an overlapping portion in a light distribution pattern PTN and to further increase the accuracy of recognizing a target.

Thus far, Embodiment 1 according to the present invention has been described in detail. Embodiment 1 described above merely illustrates a specific example for implementing the present invention. The contents of Embodiment 1 do not limit the technical scope of the present invention, and a number of design changes, including modifications, additions, and deletions of constituent elements, can be made within the scope that does not depart from the spirit of the invention set forth in the claims. A new embodiment resulting from an added design change has advantageous effects of the embodiments and the variations combined. With regard to Embodiment 1 described above, the expressions "according to the present embodiment," "in the present embodiment," and so on are added for emphasis to the contents that can be subjected to such design changes as described above, but such design changes are also permitted on the contents without these expressions. Any desired combination of the constituent elements described above is also valid as an embodiment of the present invention. Hatching added along a section in the drawings does not limit the material of those with hatching.

The invention according to Embodiment 1 described above may be specified by the item indicated below.

### (Item 1)

A light distribution control method of controlling a light distribution variable lamp (2) capable of illuminating a region ahead of a vehicle with a visible light beam (L1) of a variable intensity distribution, based on an image (IMG) obtained repeatedly from an imager (4) that captures an image of the region ahead of the vehicle, the light distribution control method comprising:
extracting an index value from a predetermined region to be processed (18) in the image (IMG);
determining a light distribution pattern (PTN) such that the index value approaches a maximum value; and
controlling the light distribution variable lamp (2) so as to form the light distribution pattern (PTN),
the index value being at least one of a mean intensity of histograms of oriented gradients (HOG) feature values of a plurality of pixels of the region to be processed (18) or an edge gray level proportion indicating, in a local binary pattern (LBP) histogram of the plurality of pixels, a proportion of the number of pixels belonging to a gray level of an edge portion to the total number of the plurality of pixels.

### (Embodiment 2)

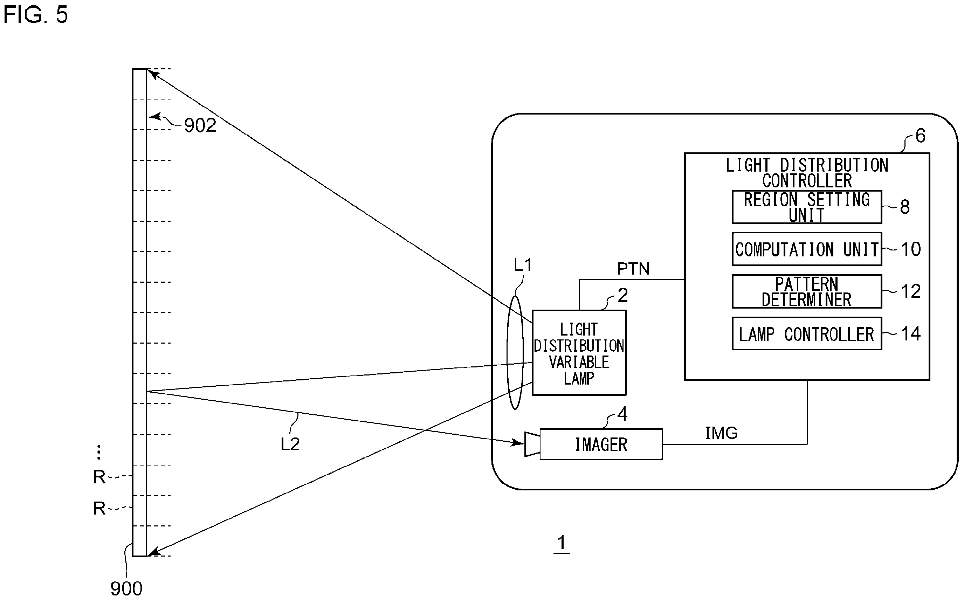

Fig. 5 is a block diagram of a vehicular lamp system according to Embodiment 2. Fig. 5 depicts some of the constituent elements of a vehicular lamp system 1 in the form of functional blocks. These functional blocks are implemented, in terms of their hardware configuration, by elements and/or circuits, such as a CPU or a memory of a computer, or implemented, in terms of their software configuration, by a computer program or the like. It is to be appreciated by a person skilled in the art that these functional blocks can be implemented in a variety of forms through combinations of hardware and software.

The vehicular lamp system 1 includes a light distribution variable lamp 2, an imager 4, and a light distribution controller 6. These members may be embedded within a single housing, or one or more of the members may be provided outside the housing. For example, the imager 4 may be an onboard camera provided in the vehicle compartment or may be a camera with a built-in lamp housed inside a lamp room along with the light distribution variable lamp 2. The light distribution controller 6 may be embedded in a vehicle ECU or embedded in a lamp ECU. As will be described later, the light distribution controller 6 includes a region setting unit 8, a computation unit 10, a pattern determiner 12, and a lamp controller 14. One or more of these components may be embedded in the vehicle ECU, and the remaining one or more components may be embedded in the lamp ECU.

The light distribution variable lamp 2 is a lamp capable of illuminating a region ahead of a vehicle with a visible light beam L1 of a variable intensity distribution. The light distribution variable lamp 2 is enabled to vary the illuminance of light that shines on each of a plurality of individual regions R arrayed ahead of the vehicle independently of each other. The plurality of individual regions R are arrayed, for example, in a matrix. The light distribution variable lamp 2 receives information instructing a light distribution pattern PTN from the light distribution controller 6 and emits a visible light beam L1 having an intensity distribution corresponding to the light distribution pattern PTN. With this operation, the light distribution pattern PTN is formed ahead of the host vehicle. A light distribution pattern PTN can be regarded as a two-dimensional illuminance distribution of an illumination pattern 902 that the light distribution variable lamp 2 forms on an imaginary vertical screen 900 located ahead of the host vehicle.

There is no particular limitation on the configuration of the light distribution variable lamp 2, and the light distribution variable lamp 2 includes, for example, a plurality of light sources arrayed in a matrix and a lighting circuit that drives the light sources to turn them on independently of each other. Some preferred examples of such a light source include a semiconductor light source, such as a light emitting diode (LED), a laser diode (LD), or an organic or inorganic electroluminescence (EL) light source. The individual regions R are mapped to the respective light sources, and each individual region R is illuminated individually with light from the corresponding light source. In order to form an illuminance distribution corresponding to a given light distribution pattern PTN, the light distribution variable lamp 2 may include, for example, a pattern forming device of a matrix type, such as a digital mirror device (DMD) or a liquid-crystal device, or a pattern forming device of a scan optics type that scans a space ahead of the host vehicle with light from the light sources.

The length of time required for the light distribution variable lamp 2 to form a single light distribution pattern PTN is, for example, from 0.1 ms to 5 ms. Meanwhile, the resolution of the light distribution variable lamp 2, or in other words the light distribution resolving power, is, for example, from 1,000 pixels to 2,000,000 pixels. The resolution (light distribution resolving power) of the light distribution variable lamp 2 refers to the number of unit areas whose illuminance can be changed independently of each other in a light distribution pattern PTN. In one example, unit areas correspond to the respective individual regions R.

The imager 4 has sensitivity to a visible light range and repeatedly captures an image of the region ahead of the vehicle. The imager 4 captures an image of reflected light L2 of a visible light beam L1 reflected by an object located ahead of the vehicle. It suffices that the imager 4 have sensitivity to the wavelength range of at least a visible light beam L1. An image IMG that the imager 4 generates is sent to the light distribution controller 6. The image IMG is also sent to the vehicle ECU. The vehicle ECU can use the acquired image IMG for target recognition in ADAS or automatic driving. The imager 4 has a frame rate of, for example, from 200 fps to 10,000 fps (from 0.1 ms to 5 ms per frame). Meanwhile, the imager 4 has a resolution of, for example, from 300,000 pixels to 5,000,000 pixels.

The light distribution controller 6 controls illumination of light from the light distribution variable lamp 2 based on an image IMG obtained from the imager 4, and controls a light distribution pattern PTN dynamically and adaptively. The light distribution controller 6 can be formed by a digital processor. The light distribution controller 6 may be formed, for example, by a combination of a microcomputer including a CPU and a software program or by a field programmable gate array (FPGA), an application specific IC (ASIC), or the like.

The light distribution controller 6 includes the region setting unit 8, the computation unit 10, the pattern determiner 12, and the lamp controller 14. These components each operate as an integrated circuit constituting the component executes a program stored in a memory. An operation of each component will be described below in detail.

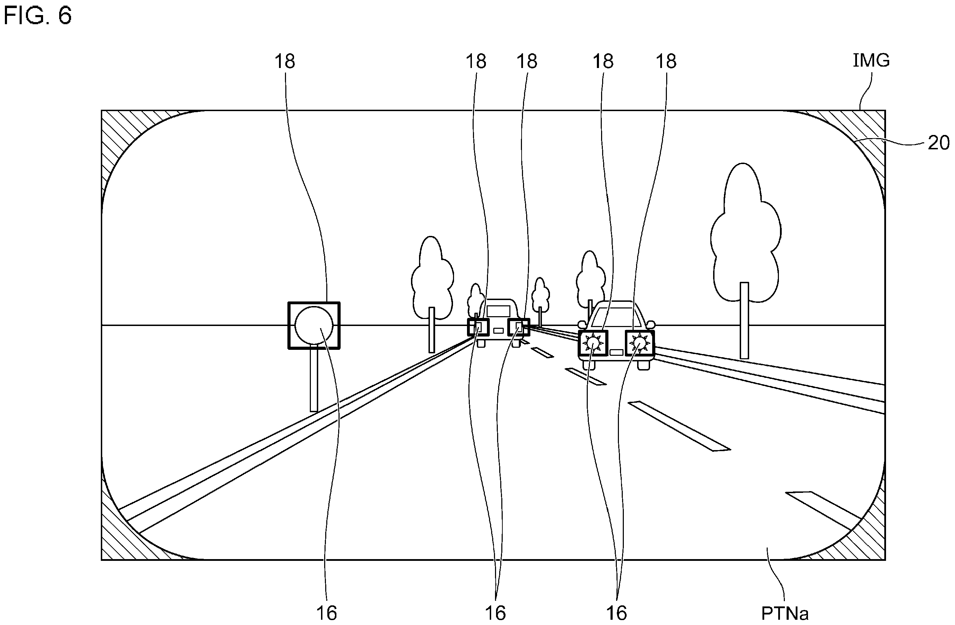

Fig. 6 is a schematic diagram of an image IMG generated while a reference light distribution pattern PTNa is formed. The region setting unit 8 sets a predetermined region to be processed 18 based on a pixel region 16 having a pixel value no lower than a predetermined value in an image IMG. The pixel value is, for example, a luminance value. The region setting unit 8 can set a region to be processed 18 in an illumination-capable range 20 within an image IMG that the light distribution variable lamp 2 can illuminate with a visible light beam L1. In one example, in the case illustrated in Fig. 6, substantially the entirety of the image IMG is the illumination-capable range 20.

The region setting unit 8 sets, as a pixel region 16, a set of pixels having a maximum luminance value, for example, in an image IMG generated while a predetermined reference light distribution pattern PTNa is formed ahead of the host vehicle. For example, a reference light distribution pattern PTNa is a light distribution pattern whose entirety is at the maximum illuminance. Information on the reference light distribution pattern PTNa is held beforehand in the pattern determiner 12. For example, the region setting unit 8 can cause the light distribution variable lamp 2 to form the reference light distribution pattern PTNa via the pattern determiner 12 and the lamp controller 14. Herein, the region setting unit 8 may hold beforehand a threshold concerning pixel values and set, as a pixel region 16, a set of pixels having a pixel value no lower than the threshold. Values such as a predetermined value or a threshold concerning pixel values (luminance values) can be set, as appropriate, by a person designing the device based on experiments or simulations.

A high-luminance pixel region 16 is generated by a light reflective object present ahead of the host vehicle. A light reflective object is a target whose presence should be noticed in ADAS or automatic driving. A light reflective object is, for example, at least one selected from the group consisting of a road sign, a roadside guide (delineator), and a signboard. Alternatively, a light reflective object is an object having a retroreflective surface in a part thereof that is to be illuminated with light from the light distribution variable lamp 2. A high-luminance pixel region 16 is also generated by a lamp of a front vehicle, such as a headlamp or a tail lamp. Therefore, a region to be processed 18 overlaps a light reflective object or a lamp of a front vehicle.

The region setting unit 8 sets a region to be processed 18 based on an identified high-luminance pixel region 16. The minimum unit of the size of a region to be processed 18 corresponds to the light distribution resolving power of the light distribution variable lamp 2. For example, a region to be processed 18 is mapped one-to-one to a unit region of a light distribution pattern PTN. In other words, the minimum unit of a region to be processed 18 corresponds to a single individual region R.

In a case where the pixels in an image IMG and the unit regions in a light distribution pattern PTN are in a one-to-one correspondence, the region setting unit 8 can set, as a region to be processed 18, a set of unit regions overlapping one pixel region 16. Meanwhile, in a case where a plurality of unit regions correspond to one pixel as well, the region setting unit 8 can set, as a region to be processed 18, a set of unit regions overlapping one pixel region 16. Therefore, in these cases, the region setting unit 8 can set a region to be processed 18 shaped substantially identical to a light reflective object or a lamp in an image IMG. Herein, a predetermined margin may be provided around a pixel region 16, and a region to be processed 18 that is larger than the pixel region 16 may be set.

Meanwhile, in a case where one unit region corresponds to a plurality of pixels, the region setting unit 8 can set a region to be processed 18 in the following manner. Specifically, in a case where one pixel region 16 extends across a plurality of unit regions, the region setting unit 8 can set, as a region to be processed 18, all the unit regions overlapping the pixel region 16. Alternatively, the region setting unit 8 may set a unit region having the largest area overlapping a pixel region 16 as a region to be processed 18 corresponding to this pixel region 16.

Regardless of the correspondence relationship between the pixels and the unit regions, if an image IMG includes a plurality of pixel regions 16, it is preferable to set a region to be processed 18 for each of these pixel regions 16. In other words, it is preferable that there be no upper limit on the number of regions to be processed 18 that can be set in an image IMG. However, there may be an upper limit on the number of regions to be processed 18. In a case where the upper limit is set on the number of regions to be processed 18, it is preferable that the regions to be processed 18 be assigned sequentially to pixel regions 16 having a greater area. The region setting unit 8 sends information indicating a region or regions to be processed 18 to the computation unit 10.

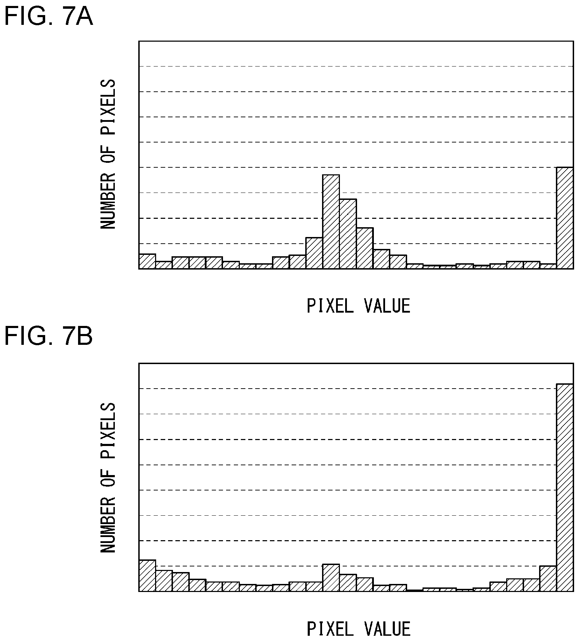

Fig. 7A schematically illustrates one example of an LBP histogram extracted from a region to be processed 18. Fig. 7B schematically illustrates one example of a template LBP histogram. As illustrated in Fig. 7A, the computation unit 10 extracts a local binary pattern (LBP) histogram of a region to be processed 18 within an image IMG by subjecting the region to be processed 18 to a known image processing technique.

Meanwhile, as illustrated in Fig. 7B, the computation unit 10 holds a template LBP histogram prepared beforehand in its memory. A template LBP histogram of one example is an LBP histogram extracted from a region to be processed 18 that overlaps a light reflective object (e.g., road sign) in an image IMG captured during the daytime. A template LBP histogram may be a histogram obtained by averaging a plurality of LBP histograms. A template LBP histogram is, for example, a histogram that has been confirmed beforehand to yield a recognition score that is no lower than a reference value, or more preferably to yield the highest score, in a target recognition algorithm used in ADAS or automatic driving.

The computation unit 10 calculates the degree of similarity between an extracted LBP histogram and a template LBP histogram. The computation unit 10 according to the present embodiment calculates an index value indicating the degree of similarity through computation of inner product of a vector obtained from an extracted LBP histogram and a vector obtained from a template LBP histogram. An LBP histogram can be regarded as a vector having pixel values as its components. An index value is the cosine (cos θ) of an angle formed by two vectors obtained, for example, through computation of inner product. Alternatively, an index value is an inner product value of two normalized vectors. Therefore, the maximum value of the index value is one. The computation unit 10 sends information indicating an index value serving as the degree of similarity to the pattern determiner 12.

The pattern determiner 12 determines a light distribution pattern PTN such that the degree of similarity approaches its maximum value. The pattern determiner 12 according to the present embodiment determines a light distribution pattern PTN such that the index value approaches its maximum value, that is, determines a light distribution pattern PTN such that the cosine of the angle formed by two vectors or the inner product of the two vectors approaches one. The degree of similarity and the index value can be adjusted by changing the illuminance (intensity) of light that shines on a region to be processed 18. Therefore, the pattern determiner 12 can bring an LBP histogram of a region to be processed 18 in an image IMG obtained while a light distribution pattern PTN is formed closer to a template LBP histogram by changing the illuminance of a portion overlapping a region to be processed 18 in the light distribution pattern PTN (this portion is referred to below as an overlapping portion, as appropriate).

In other words, as the degree of similarity and the index value are brought closer to their maximum values, the way how a light reflective object appears in an image IMG captured while a light distribution pattern PTN is formed can be brought closer to the way how the light reflective object appears in an image IMG captured during the daytime. Thus, the accuracy of recognizing a light reflective object with use of the imager 4 can be increased. Herein, the illuminance of a portion excluding an overlapping portion in a light distribution pattern PTN is set based on other light distribution control. The pattern determiner 12 sends information indicating a determined light distribution pattern PTN to the lamp controller 14.

The lamp controller 14 sends information instructing a determined light distribution pattern PTN to the light distribution variable lamp 2 and controls the light distribution variable lamp 2 so as to form the light distribution pattern PTN. For example, in a case where the light sources are controlled through analog light control, the lamp controller 14 adjusts the direct-current level of the driving current that flows in the light sources. Meanwhile, in a case where the light sources are controlled through pulse width modulation (PWM) light control, the lamp controller 14 adjusts the mean level of the driving current by switching the current that flows in the light sources and adjusting the ratio of on periods. In a case where the light distribution variable lamp 2 includes a DMD, the lamp controller 14 may control the on/off switching of each mirror element constituting the DMD. In a case where the light distribution variable lamp 2 includes a liquid-crystal device, the lamp controller 14 may control the optical transmittance of the liquid-crystal device.

With such control, a light distribution pattern PTN that can improve the accuracy of recognizing a target is formed ahead of the host vehicle. Then, the imager 4 generates an image IMG while this light distribution pattern PTN is formed. In one example, the region setting unit 8 assigns, to each newly acquired image IMG, a region to be processed 18 set in an image IMG generated while a reference light distribution pattern PTNa is formed, until a reset process (described later) is executed. In other words, a region to be processed 18 is fixed until the reset process is performed. Thereafter, the degree of similarity is calculated again, a light distribution pattern PTN is determined again, and the light distribution pattern PTN is formed again.

In one example, the light distribution controller 6 executes a reset process when a series of operations from the acquisition of an image IMG to the formation of a light distribution pattern PTN has been repeated a predetermined number of times. In the reset process, the lamp controller 14 controls the light distribution variable lamp 2 so as to form a reference light distribution pattern PTNa. The region setting unit 8 sets a region to be processed 18 in an image IMG newly generated while the reference light distribution pattern PTNa is formed. Thus, a region to be processed 18 can follow the movement of its corresponding pixel region 16.

The timing of starting a reset process can be grasped by, for example, counting the number of images IMG that the region setting unit 8 has acquired after a reference light distribution pattern PTNa has been formed or after a region to be processed 18 has been set. Alternatively, the timing of starting a reset process can be grasped by counting the number of times the pattern determiner 12 has determined a light distribution pattern PTN or by counting the number of times the lamp controller 14 has formed a light distribution pattern PTN. The predetermined number of times, the number of images IMG, or the number of times a light distribution pattern PTN is determined or formed used in relation to the execution of a reset process can be set, as appropriate, by a person designing the device based on experiments or simulations. The illuminance of light that shines on a region outside a region to be processed 18 because of the execution of a reset process is increased preferably gradually. Thus, any sense of discomfort caused to the driver can be reduced.

The pattern determiner 12 according to the present embodiment reduces the amount of change in the illuminance with an increase in the number of times the illuminance of light that shines on the region to be processed 18 is changed. In other words, the pattern determiner 12 reduces the change in the illuminance of light that shines on a region to be processed 18 with an increase in the number of times a light distribution pattern PTN is determined after the region to be processed 18 has been set.

For example, the illuminance of an overlapping portion in a light distribution pattern PTN formed following a reference light distribution pattern PTNa is set to a value obtained by multiplying a maximum illuminance value by a dimming rate α. The illuminance of an overlapping portion in a light distribution pattern PTN determined thereafter is set to a value obtained by multiplying the illuminance of the overlapping portion in the light distribution pattern PTN being formed at that moment by a dimming rate α smaller than the dimming rate α used previously. With this configuration, the degree of similarity and the index value increase gradually and approach their maximum values. As the illuminance of an overlapping portion is reduced gradually, the degree of similarity and the index value may turn to decrease at a certain timing. In other words, the LBP histogram of the region to be processed 18 starts to deviate from the template LBP histogram.

When the degree of similarity and the index value turn to decrease, the pattern determiner 12 increases the illuminance of an overlapping portion in a light distribution pattern PTN formed thereafter. In other words, the illuminance of an overlapping portion in a light distribution pattern PTN determined immediately after the degree of similarity and the index value have turned to decrease is set to a value obtained by multiplying the illuminance of an overlapping portion in a light distribution pattern PTN being formed at that moment by a brightening rate β. With this configuration, the degree of similarity and the index value turn to increase again and approach their maximum values. Preferably, the brightening rate β used immediately after the degree of similarity and the index value have turned to decrease is smaller than the dimming rate α used immediately before the degree of similarity and the index value have turned to decrease.

The illuminance of an overlapping portion in a light distribution pattern PTN determined thereafter is set to a value obtained by multiplying the illuminance of an overlapping portion in a light distribution pattern PTN being formed at that moment by a brightening rate β smaller than the brightening rate β used previously. When the degree of similarity and the index value turn to decrease again, the illuminance of an overlapping portion is reduced. Thereafter, the illuminance of the overlapping portion is reduced and increased in an alternating manner until a reset process is executed.

When the dimming rate α and the brightening rate β are reduced gradually, the degree of similarity and the index value can be kept from decreasing by a large amount when the degree of similarity and the index value turn to decrease from an increase. With this configuration, the state in which an LBP histogram extracted from a region to be processed 18 is close to a template LBP histogram can be retained more easily. The change in the illuminance of an overlapping portion may be linear or nonlinear. In other words, the dimming rate α may be changed each time a light distribution pattern PTN is determined or changed after a light distribution pattern PTN has been determined a predetermined number of times while the same dimming rate α is used. The same applies to the brightening rate β.

The template LBP histogram described above corresponds to a light reflective object imaged during the daytime. In other words, in the control described above, the illuminance of light that shines on a region to be processed 18 is adjusted with every high-luminance pixel region 16 included in the image IMG regarded as a light reflective object. In this case, the illuminance to a lamp of a front vehicle is adjusted in the same manner as the illuminance to a light reflective object is adjusted. However, since a lamp is a self-luminous object, even if the illumination of light that shines on the lamp changes, the change in the way how the lamp appears in an image IMG is small. Therefore, no problem arises even if every high-luminance pixel region 16 included in an image IMG is regarded as a light reflective object.

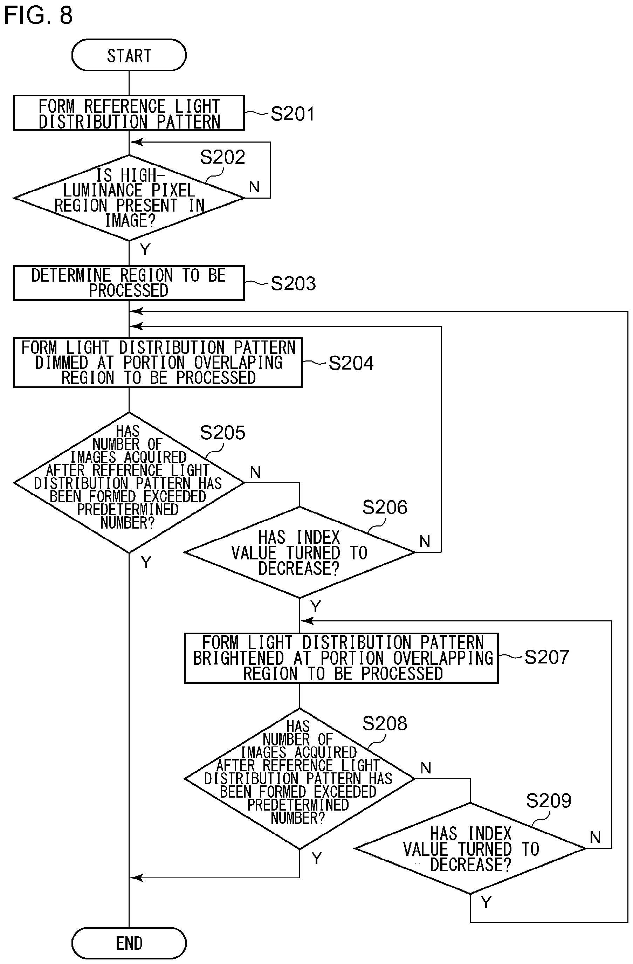

Fig. 8 is a flowchart illustrating one example of light distribution control executed by the light distribution controller 6. This flow is executed repeatedly at predetermined timings, for example, when the execution of the light distribution control is instructed via a light switch (not illustrated) and when the ignition is on. While the light distribution control is being executed, the imager 4 repeatedly captures an image of the region ahead of the vehicle and sends an image IMG to the light distribution controller 6.

First, the light distribution controller 6 controls the light distribution variable lamp 2 so as to form a reference light distribution pattern PTNa (S201). Then, the light distribution controller 6 determines whether a high-luminance pixel region 16 is present in an image IMG generated while the reference light distribution pattern PTNa is formed (S202). If a high-luminance pixel region 16 is present (Y at S202), the light distribution controller 6 determines a region to be processed 18 based on the pixel region 16 (S203). If no high-luminance pixel region 16 is present (N at S202), the light distribution controller 6 repeatedly determines whether a pixel region 16 is present based on an image IMG acquired successively (S202).

Next, the light distribution controller 6 determines a light distribution pattern PTN that is dimmed at a portion overlapping the region to be processed 18 and causes this light distribution pattern PTN to be formed (S204). Thereafter, the light distribution controller 6 determines whether the number of images IMG acquired after the reference light distribution pattern PTNa has been formed has exceeded a predetermined value (S205). If the number of acquired images IMG exceeds the predetermined value (Y at S205), the light distribution controller 6 terminates this routine. Upon the end of this routine, the next routine starts, and a reference light distribution pattern PTNa is formed (S201). The process ranging from the end of one routine to the formation of a reference light distribution pattern PTNa in the next routine corresponds to the execution of a reset process.

If the number of acquired images IMG does not exceed the predetermined value (N at S205), the light distribution controller 6 determines whether an index value has turned to decrease based on an image IMG that the imager 4 has generated while the light distribution pattern PTN has been formed at step S204 (S206). In a case where a plurality of regions to be processed 18 are set, the light distribution controller 6 determines whether an index value of each of the plurality of regions to be processed 18 has turned to decrease. If the index value has not turned to decrease (N at S206), the light distribution controller 6 causes a light distribution pattern PTN that is further dimmed at a portion overlapping the region to be processed 18 to be formed (S204).

If the index value has turned to decrease (Y at S206), the light distribution controller 6 determines a light distribution pattern PTN that is brightened at a portion overlapping the region to be processed 18 and causes this light distribution pattern PTN to be formed (S207). Thereafter, the light distribution controller 6 determines whether the number of images IMG acquired after the reference light distribution pattern PTNa has been formed has exceeded a predetermined value (S208). If the number of acquired images IMG exceeds the predetermined value (Y at S208), the light distribution controller 6 terminates this routine and executes a reset process.

If the number of acquired images IMG does not exceed the predetermined value (N at S208), the light distribution controller 6 determines whether the index value has turned to decrease based on an image IMG that the imager 4 has generated while the light distribution pattern PTN has been formed at step S207 (S209). If the index value has not turned to decrease (N at S209), the light distribution controller 6 causes a light distribution pattern PTN that is further brightened at a portion overlapping the region to be processed 18 to be formed (S207). If the index value has turned to decrease (Y at S209), the light distribution controller 6 determines a light distribution pattern PTN that is dimmed at a portion overlapping the region to be processed 18 and causes this light distribution pattern PTN to be formed (S204).

According to the present embodiment, a light reflective object serves as a target of light distribution control. Alternatively, a target other than a light reflective object can serve as a target of light distribution control when a template LBP histogram corresponding to that target is prepared.

As described thus far, the light distribution controller 6 according to the present embodiment includes the computation unit 10 that extracts a local binary pattern (LBP) histogram of a predetermined region to be processed 18 within an image IMG that the imager 4 has generated and calculates the degree of similarity between the extracted LBP histogram and a template LBP histogram prepared beforehand, the pattern determiner 12 that determines a light distribution pattern PTN such that the degree of similarity approaches its maximum value, and the lamp controller 14 that controls the light distribution variable lamp 2 so as to form the light distribution pattern PTN. The vehicular lamp system 1 according to the present embodiment includes the light distribution variable lamp 2 capable of illuminating a region ahead of a vehicle with a visible light beam L1 of a variable intensity distribution, the imager 4 that captures an image of the region ahead of the vehicle, and the light distribution controller 6 according to the present embodiment.

Conventionally, in light distribution control of assisting the driver with target recognition, the illuminance of light that shines on a target is changed with the luminance of the target itself being used as an index. For example, in the conventional light distribution control, in a case where a target is a light reflective object, the illuminance of light that shines on the light reflective object is raised only if the luminance of this light reflective object has such a low luminance value that may make it difficult for the driver to visually recognize the light reflective object. Meanwhile, the illuminance of light that shines on the light reflective object is lowered if the luminance of the light reflective object has such a high luminance value that may cause glare to the driver.

In this respect, the present inventor has found that, although the light distribution control that is based on the luminance itself contributes to the target recognition by the driver, such light distribution control does not necessarily contribute to the target recognition involving the use of an image IMG in ADAS or automatic driving. Then, through diligent study based on such findings, the present inventor has conceived of the use of an LBP histogram as a new index.

Specifically, an LBP histogram extracted from a region to be processed 18 is compared against a template LBP histogram prepared beforehand, light distribution control is performed so as to bring the degree of similarity between the LBP histogram and the template LBP histogram closer to its maximum value. Such light distribution control makes it possible to increase the accuracy of recognizing a target with use of an image IMG in ADAS or automatic driving. In a case where a target is a light reflective object, the illuminance of light that shines on the light reflective object can be reduced appropriately, and thus lens flare or blooming that could occur around the light reflective object can be suppressed. This makes it possible to increase also the accuracy of recognizing other targets or traffic participants present around the light reflective object.

The light distribution controller 6 according to the present embodiment further includes the region setting unit 8 that sets a region to be processed 18 based on a pixel region 16 having a pixel value no lower than a predetermined value in an image IMG. Thus, the accuracy of recognizing a light reflective object can be further increased.

The computation unit 10 according to the present embodiment calculates an index value indicating the degree of similarity through computation of inner product of a vector obtained from an extracted LBP histogram and a vector obtained from a template LBP histogram, and the pattern determiner 12 determines a light distribution pattern PTN such that the index value approaches its maximum value. In this manner, the use of the index value obtained through computation of inner product as the degree of similarity makes it possible to simplify the light distribution control.

The pattern determiner 12 according to the present embodiment gradually changes the illuminance of a portion overlapping a region to be processed 18 in a light distribution pattern PTN and reduces the amount of change with an increase in the number of times the change is made. With this configuration, the state in which the degree of similarity between an LBP histogram extracted from a region to be processed 18 and a template LBP histogram is high can be retained more easily. Accordingly, the accuracy of recognizing a target can be further increased.

Thus far, Embodiment 2 according to the present invention has been described in detail. Embodiment 2 described above merely illustrates a specific example for implementing the present invention. The contents of Embodiment 2 do not limit the technical scope of the present invention, and a number of design changes, including modifications, additions, and deletions of constituent elements, can be made within the scope that does not depart from the spirit of the invention set forth in the claims. A new embodiment resulting from an added design change has advantageous effects of the embodiments and the variations combined. With regard to Embodiment 2 described above, the expressions "according to the present embodiment," "in the present embodiment," and so on are added for emphasis to the contents that can be subjected to such design changes as described above, but such design changes are also permitted on the contents without these expressions. Any desired combination of the constituent elements described above is also valid as an embodiment of the present invention. Hatching added along a section in the drawings does not limit the material of those with hatching.

The invention according to Embodiment 2 described above may be specified by the item indicated below.

### (Item 2)

A light distribution control method of controlling a light distribution variable lamp (2) capable of illuminating a region ahead of a vehicle with a visible light beam (L1) of a variable intensity distribution, based on an image (IMG) obtained repeatedly from an imager (4) that captures an image of the region ahead of the vehicle, the light distribution control method comprising:
extracting an LBP histogram of a predetermined region to be processed (18) within an image (IMG) and calculating the degree of similarity between the extracted LBP histogram and a template LBP histogram prepared beforehand;
determining a light distribution pattern such that the degree of similarity approaches a maximum value; and
controlling the light distribution variable lamp (2) so as to form the light distribution pattern.

### [INDUSTRIAL APPLICABILITY]

The present invention can be used in light distribution controllers, vehicular lamp systems, and light distribution control methods.

### [DESCRIPTION OF THE REFERENCE NUMERALS]

1 vehicular lamp system, 2 light distribution variable lamp, 4 imager, 6 light distribution controller, 8 region setting unit, 10 computation unit, 12 pattern determiner, 14 lamp controller, 16 pixel region, 18 region to be processed, 22 light reflective object, 24 pedestrian, 28 first region, 30 second region

## Claims

1. A light distribution controller that controls a light distribution variable lamp capable of illuminating a region ahead of a vehicle with a visible light beam of a variable intensity distribution, based on an image obtained from an imager that captures an image of the region ahead of the vehicle, the light distribution controller comprising:
a computation unit that extracts an index value from a predetermined region to be processed within the image;
a pattern determiner that determines a light distribution pattern such that the index value approaches a maximum value; and
a lamp controller that controls the light distribution variable lamp so as to form the light distribution pattern,
the index value being at least one of a mean intensity of histograms of oriented gradients (HOG) feature values of a plurality of pixels of the region to be processed or an edge gray level proportion indicating, in a local binary pattern (LBP) histogram of the plurality of pixels, a proportion of the number of pixels belonging to a gray level of an edge portion to a total number of the plurality of pixels.

2. The light distribution controller according to claim 1, further comprising:
a region setting unit that sets the region to be processed based on a pixel region having a pixel value no lower than a predetermined value within the image generated while a reference light distribution pattern composed of light having an illuminance of no lower than 50% of a maximum illuminance of the light distribution variable lamp is formed in the region ahead of the vehicle.

3. The light distribution controller according to claim 1 or 2, wherein
the computation unit
extracts the edge gray level proportion from the region to be processed if the region to be processed is included in a first region where a predetermined light reflective object is predicted to appear in the image, or
extracts the mean intensity of HOG feature values from the region to be processed if the region to be processed is included in a second region where a pedestrian is predicted to appear in the image.

4. The light distribution controller according to any one of claims 1 to 3, wherein
the pattern determiner gradually changes an illuminance of a portion overlapping the region to be processed in the light distribution pattern and reduces an amount of the change with an increase in the number of times the change is made.

5. A vehicular lamp system, comprising:
a light distribution variable lamp capable of illuminating a region ahead of a vehicle with a visible light beam of a variable intensity distribution;
an imager that captures an image of the region ahead of the vehicle; and
the light distribution controller according to any one of claims 1 to 4.

6. A light distribution control method of controlling a light distribution variable lamp capable of illuminating a region ahead of a vehicle with a visible light beam of a variable intensity distribution, based on an image obtained repeatedly from an imager that captures an image of the region ahead of the vehicle, the light distribution control method comprising:
extracting an index value from a predetermined region to be processed within the image;
determining a light distribution pattern such that the index value approaches a maximum value; and
controlling the light distribution variable lamp so as to form the light distribution pattern,
the index value being at least one of a mean intensity of histograms of oriented gradients (HOG) feature values of a plurality of pixels of the region to be processed or an edge gray level proportion indicating, in a local binary pattern (LBP) histogram of the plurality of pixels, a proportion of the number of pixels belonging to a gray level of an edge portion to a total number of the plurality of pixels.

7. A light distribution controller that controls a light distribution variable lamp capable of illuminating a region ahead of a vehicle with a visible light beam of a variable intensity distribution, based on an image obtained from an imager that captures an image of the region ahead of the vehicle, the light distribution controller comprising:
a computation unit that extracts a local binary pattern (LBP) histogram of a predetermined region to be processed within the image and calculates a degree of similarity between the extracted LBP histogram and a template LBP histogram prepared beforehand;
a pattern determiner that determines a light distribution pattern such that the degree of similarity approaches a maximum value; and
a lamp controller that controls the light distribution variable lamp so as to form the light distribution pattern.

8. The light distribution controller according to claim 7, further comprising:
a region setting unit that sets the region to be processed based on a pixel region having a pixel value no lower than a predetermined value within the image.

9. The light distribution controller according to claim 7 or 8, wherein
the computation unit calculates an index value indicating the degree of similarity through computation of inner product of a vector obtained from the extracted LBP histogram and a vector obtained from the template LBP histogram, and
the pattern determiner determines the light distribution pattern such that the index value approaches a maximum value.

10. The light distribution controller according to any one of claims 7 to 9, wherein
the pattern determiner gradually changes an illuminance of a portion overlapping the region to be processed in the light distribution pattern and reduces an amount of the change with an increase in the number of times the change is made.

11. A vehicular lamp system, comprising:
a light distribution variable lamp capable of illuminating a region ahead of a vehicle with a visible light beam of a variable intensity distribution;
an imager that captures an image of the region ahead of the vehicle; and
the light distribution controller according to any one of claims 7 to 10.

12. A light distribution control method of controlling a light distribution variable lamp capable of illuminating a region ahead of a vehicle with a visible light beam of a variable intensity distribution, based on an image obtained repeatedly from an imager that captures an image of the region ahead of the vehicle, the light distribution control method comprising:
extracting a local binary pattern (LBP) histogram of a predetermined region to be processed within the image and calculating a degree of similarity between the extracted LBP histogram and a template LBP histogram prepared beforehand;
determining a light distribution pattern such that the degree of similarity approaches a maximum value; and
controlling the light distribution variable lamp so as to form the light distribution pattern.
